# DEMANDE DE BREVET EUROPEEN

(11) **EP 4 672 098 A1**
(43) Date de publication de la demande: **31.12.2025**
(21) Numéro de dépôt: 25185025.1
(22) Date de dépôt: 24.06.2025
(51) Int. Cl.: G06N 20/00, G06N 3/02, H04W 52/02

(54) **PROCEDE DE GESTION DE MISE EN VEILLE D'UNE RESSOURCE RADIO D'UN DISPOSITIF POINT D ACCES SANS FIL, DISPOSITIF DE GESTION DE MISE EN VEILLE, ET DISPOSITF POINT D ACCES SANS FIL**

(30) Priorité: 26.06.2024 FR 2406861
(71) Demandeur: SAGEMCOM BROADBAND SAS, 92270 Bois-Colombes (FR)
(72) Inventeur: SOUILEM, Mouna, 92270 BOIS-COLOMBES (FR); BELKAROUI, Rami, 92270 BOIS-COLOMBES (FR); LE ROUX, Sylvain, 92270 BOIS-COLOMBES (FR)
(74) Mandataire: Cabinet Le Guen Maillet

(57) **Abrégé**

L'invention concerne un procédé pour déterminer par prédiction, en utilisant un apprentissage automatisé de type *« machine learning »,* des plages de temps (T2) pendant lesquelles une interface radio (R1) d'un point d'accès sans fil (11) d'un réseau de communication (1) peut être éteinte ou mise en veille, à des fins d'économie d'énergie.

## Description

### DOMAINE TECHNIQUE

La présente invention concerne le domaine des réseaux de communication comprenant un ou plusieurs dispositifs points d'accès sans fil, notamment dans des environnements domestiques ou professionnels. L'invention concerne plus précisément une méthode optimisée d'extinction ou de mise en veille de ressources radios équipant un ou plusieurs dispositifs point d'accès sans fil d'un réseau de communication.

### ETAT DE LA TECHNIQUE ANTERIEURE

Les réseaux de télécommunication sans fil utilisent des interfaces de communication par ondes électromagnétiques, lesquelles interfaces sont classiquement nommées interfaces radio, radios, ou encore ressources radio. A des fins d'économie d'énergie, les ressources radio, réparties dans des dispositifs ou équipement de type point d'accès sans fil, ne sont pas alimentées constamment mais peuvent être éteintes ou mises en veille. Différentes techniques de détermination des instants d'extinction et de remise en route des ressources radio existent, mais elles présentent un risque important de voir une interface radio éteinte à un instant ou un utilisateur tente d'y connecter une station pour accéder au réseau de communication. Il existe alors un besoin de minimiser ce risque. La situation peut être améliorée.

### EXPOSÉ DE L'INVENTION

Un objet de la présente invention est de proposer un procédé d'extinction ou de mise en veille de ressources radio de dispositifs point d'accès sans fil d'un réseau de communication visant à économiser de l'énergie électrique tout en réduisant le risque de créer des absences ou des interruptions de service à des moments inopportuns. Ainsi, il est proposé une méthode pour déterminer pour chaque point d'accès d'un réseau de communication, ou plus précisément pour chaque ressource radio d'un réseau de communication, une méthode pour déterminer les plages de temps les plus appropriées pendant lesquelles cette ressource radio peut être mise en veille.

A cet effet, il est proposé un procédé de gestion de mise en veille d'une ressource radio d'un dispositif point d'accès sans fil d'un réseau de communication, le procédé comprenant :
- i) une obtention de premières informations représentatives d'une absence d'utilisation par une station de ladite ressource radio en relation avec une première période de référence dite période d'apprentissage,
- ii) une détermination d'une ou plusieurs deuxièmes périodes, dites périodes d'extinction, à partir de tout ou partie desdites premières informations et en relation avec des troisièmes périodes, dites périodes de référence, chacune des périodes d'extinction étant d'une durée inférieure ou égale à ladite période d'apprentissage, et chacune des périodes de référence étant inférieure à ladite période d'apprentissage et inférieure ou égale à l'une quelconque des périodes d'extinction,
- iii) une mise en veille de ladite ressource radio pendant la ou lesdites période d'extinction,
le procédé étant tel que ladite détermination d'une ou plusieurs périodes d'extinction comprend un entrainement d'un modèle d'apprentissage automatique (ou automatisé) implémenté par un réseau de neurones.

Selon un mode de réalisation, ladite détermination d'une ou plusieurs deuxièmes périodes est réalisée à partir d'un premier sous-ensemble desdites premières informations et une détermination d'un indice de confiance d'une absence de connexion, pour chacune desdites troisièmes périodes, est réalisée à partir d'un deuxième sous-ensemble desdites premières informations, différent dudit premier sous-ensemble.

Selon un mode de réalisation, ledit modèle d'apprentissage automatique est un modèle de classification à 2 classes selon lequel une première classe est définie par une absence de connexion d'une quelconque station à ladite ressource radio pendant une période de référence considérée et une deuxième classe est définie par une connexion d'au moins une station connectée à ladite ressource radio pendant une période de référence considérée.

L'invention a également pour objet un dispositif ou circuit, dit « module de mise en veille » d'une ressource radio d'un dispositif point d'accès sans fil d'un réseau de communication, le module de mise en veille comprenant une circuiterie électronique configurée pour opérer :
- i) une obtention de premières informations représentatives d'une absence d'utilisation par une station de ladite ressource radio en relation avec une première période de référence dite période d'apprentissage,
- ii) une détermination d'une ou plusieurs deuxièmes périodes, dites périodes d'extinction, à partir de tout ou partie desdites premières informations et en relation avec des troisièmes périodes, dites périodes de référence, chacune des périodes d'extinction étant d'une durée inférieure ou égale à ladite période d'apprentissage, et chacune des périodes de référence étant inférieure à ladite période d'apprentissage et inférieure ou égale à l'une quelconque des périodes d'extinction,
- iii) une mise en veille de ladite ressource radio pendant la ou lesdites périodes d'extinction,
le module de mise en veille comprenant en outre une circuiterie électronique configurée pour opérer ladite détermination d'une ou plusieurs périodes d'extinction à partir d'un entrainement d'un modèle d'apprentissage automatique.

Selon un mode de réalisation, le module de mise en veille d'une ressource radio comprend en outre une circuiterie électronique configurée pour opérer ladite détermination d'une ou plusieurs deuxièmes périodes à partir d'un premier sous-ensemble desdites premières informations et une détermination d'un indice de confiance d'absence de connexion, pour chacune desdites troisièmes périodes, à partir d'un deuxième sous-ensemble desdites premières informations, différent dudit premier sous-ensemble.

Selon un mode de réalisation, le module de mise en veille d'une ressource radio comprend en outre une circuiterie électronique configurée pour opérer ledit apprentissage automatisé grâce à un modèle de classification à deux classes selon lequel une première classe est définie par une absence de connexion d'au moins une station à ladite ressource radio pendant une période de référence considérée et une deuxième classe est définie par une connexion d'au moins une station connectée à ladite ressource radio pendant une période de référence considérée.

Un autre objet de l'invention est un dispositif point d'accès sans fil comprenant au moins une ressource radio et un module de gestion de mise en veille tel que décrit ci-avant.

Un autre objet de l'invention est un réseau de communication comprenant au moins un dispositif point d'accès tel que précité.

L'invention a aussi pour objet un produit programme d'ordinateur comprenant des instructions de codes de programme pour exécuter des étapes du procédé tel que précédemment décrit, lorsque ce programme est exécuté par un processeur d'un module de gestion de mise en veille d'une ressource radio, ainsi qu'un support de stockage comprenant un tel produit programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins j oints, parmi lesquels :
[Fig. 1] illustre un réseau de communication de type LAN comprenant des dispositifs points d'accès sans fil, selon un mode de réalisation ;
[Fig. 2] illustre des périodes de référence utilisées pour opérer un apprentissage automatisé de l'utilisation d'une ressource radio d'un dispositif point d'accès sans fil et pour opérer des périodes de mise en veille de cette ressource radio, selon un mode de réalisation ;
[Fig. 3] est un ordinogramme illustrant des étapes d'un procédé de mise en veille d'une ressource radio, selon un mode de réalisation ; et,
[Fig. 4] est un diagramme illustrant un exemple d'architecture interne d'un module de gestion de mise en veille d'une ressource radio, selon un mode de réalisation ;

### EXPOSE DETAILLE DE MODES DE REALISATION

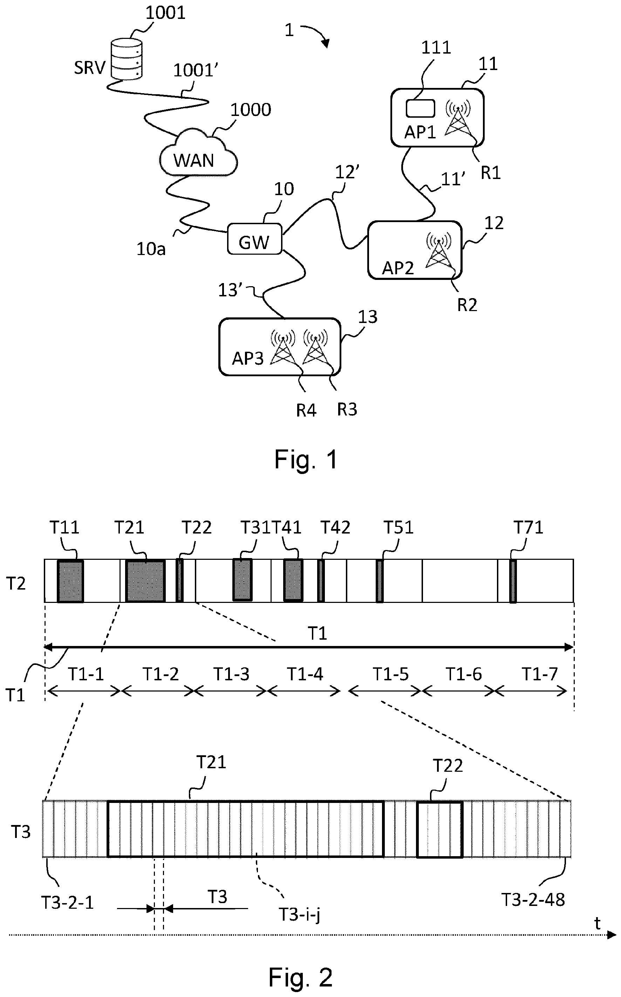

La Fig. 1 illustre un réseau de communication 1 de type LAN (de l'anglais « Local Area Network » et qui signifie « réseau local »). Le réseau de communication 1 est relié à un réseau étendu 1000 de type WAN (de l'anglais « Wide Area Network » et qui signifie « réseau étendu ») par l'intermédiaire d'une passerelle domestique GW 10 et d'un lien de communication 10a qui relie la passerelle GW 10 au réseau étendu WAN 1000. Selon l'exemple de réalisation décrit, le réseau de communication 1 comprend trois dispositifs points d'accès sans fil AP1 11, AP2 12 et AP3 13 configurés chacun pour opérer des connexions sans fil entre une ou plusieurs stations (non représentées sur la Fig. 1) et le réseau de communication 1. Selon l'exemple de réalisation décrit sur la Fig. 1, le dispositif point d'accès sans fil 11 est relié au réseau de communication 1 par l'intermédiaire du dispositif point d'accès sans fil 12, via un lien de communication 11' établi entre le dispositif point d'accès sans fil 11 et le dispositif point d'accès sans fil 12. Toujours selon l'exemple de réalisation décrit, le dispositif point d'accès sans fil 12 est relié au réseau de communication 1 par l'intermédiaire de la passerelle domestique GW 10, via un lien de communication 12'. Enfin, et toujours selon l'exemple de réalisation décrit, le dispositif point d'accès sans fil 13 est relié au réseau de communication 1 lui aussi par l'intermédiaire de la passerelle domestique GW 10, via un lien de communication 13'. Le terme « station » désigne ici tout dispositif électronique et/ou informatique configuré pour être connecté à au moins un réseau de communication LAN, tel que, par exemple, un ordinateur fixe, un ordinateur portable, une tablette connectée, un téléviseur intelligent connecté, un smartphone, une montre connectée, un appareil électroménager connecté, un dispositif d'alarme ou d'assistance aux personnes, un récepteur de programmes radiophoniques, un dispositif de stockage de données, etc., ces exemples n'étant bien évidemment pas limitatifs. Bien sûr, d'autres dispositifs électroniques et/ou informatiques divers peuvent être connectés au réseau de communication 1, mais dans un but de simplification, ceux-ci ne sont pas représentés sur la Fig. 1. Le dispositif point d'accès sans fil 11 comprend une ressource radio R1 ; le dispositif point d'accès sans fil 12 comprend une ressource radio R2 ; et le dispositif point d'accès sans fil 13 comprend deux ressources radio R3 et R4. Les termes « ressource radio » ou « radio » désignent ici une interface électronique configurée pour opérer des communications sans fil bidirectionnelles entre un dispositif distant compatible et le réseau de communication 1, par exemple selon un protocole de la famille des standards 802.11 de l'Institute of Electrical and Electronics Engineers « IEEE », ou réseaux dits de type 'Wi-Fi'. Des exemples de réalisation peuvent se placer par exemple dans le contexte du standard IEEE 802.11-2020 ou de l'amendement 802.11ax-2021 ou de l'amendement IEEE 802.11be, dans sa version D4.0 ou sa version D5.0, ou dans ses versions ultérieures ou sa version définitive. D'autres exemples de réalisation peuvent également se placer par exemple dans le contexte d'une version de norme IEEE 802.11 ou d'un amendement à cette norme 802.11 incorporant l'amendement IEEE 802.11be, comme par exemple l'amendement IEEE 802.11bf D3.0 ou l'amendement IEEE 802.11bn. Ils concernent aussi bien un réseau sans fil domestique qu'un réseau d'entreprise.

Le point dispositif d'accès sans fil 11 comprend en outre un module de gestion de mise en veille 111. De façon similaire, les points dispositifs d'accès sans fil 12 et 13 comprennent respectivement un module de gestion de mise en veille 112 et un module de gestion de mise en veille 113. A des fins de simplification, seul le module de gestion de mise en veille 111 du point d'accès sans fil 11 est représenté sur la Fig. 1. Dans la suite de la description est décrit une gestion de la mise en veille de la ressource radio R1 du point d'accès sans fil 11 seulement, laquelle s'applique de façon similaire aux modules de gestion de mise en veille des dispositifs points d'accès sans fil 12 et 13. Un serveur distant SRV 1001 est en outre connecté au réseau étendu WAN 1000 via un lien de communication 1001'. Le serveur distant est configuré pour opérer à distance des opérations, dont notamment du traitement de données, et pour communiquer avec des équipements ou dispositifs du réseau de communication 1 selon des protocoles de communication prédéfinis, notamment un protocole de communication de type IP.

Astucieusement et selon au moins un mode de réalisation, le module de gestion de mise en veille 111 de la ressource radio R1 du dispositif point d'accès sans fil 11 est configuré pour opérer, et opère, un apprentissage automatisé de l'utilisation faite de la ressource radio R1 au fil du temps. Les termes « utilisation de la ressource radio R1 » désignent ici, en relation avec la ressource radio R1, le fait d'utiliser ou non la ressource radio R1 à un instant donné pour établir une connexion entre le dispositif point d'accès sans fil 11 et une ou plusieurs stations (c'est-à-dire un ou des dispositifs tiers qui sont connectés au réseau de communication 1 via la ressource radio R1). Cette notion d'utilisation comprend en outre et plus largement, la régularité ou non d'une connexion, la fréquence de la connexion (par exemple un nombre de connexions par heure, par jour, par semaine, par mois, etc.) ainsi que le nombre de stations connectées au fil du temps (aucune station, une seule station, deux stations, trois et plus, etc.).

L'apprentissage automatisé réalisé par le module de gestion de mise en veille 111 du dispositif point d'accès sans fil 11 est opéré à partir d'informations de connexion enregistrées (mémorisées) et horodatées. Selon un mode de réalisation, toutes les informations relatives aux connexions et déconnexions d'une ou plusieurs stations survenues récemment, c'est-à-dire par exemple au cours des dernières semaines ou des derniers mois, sont mémorisées dans une mémoire non volatile du dispositif point d'accès sans fil, avec une référence à chacune des stations (par exemple une adresse MAC valant identifiant unique) et des références d'horodatage. Selon une variante, ces informations, qui constituent une forme de journal des connexions et des déconnexions pour la ressource radio R1 et plus largement le dispositif point d'accès sans fil 11, sont enregistrées dans une mémoire du serveur distant SRV 1001, aux fins de permettre l'accumulation d'un grand nombre de données, mais aussi une centralisation mutualisée pour tous les dispositifs points d'accès sans fil du réseau de communication 1. Avantageusement, ces informations, appelées ici « premières informations » sont représentatives d'une utilisation ou d'une absence d'utilisation par une quelconque station de la ressource radio R1 en relation avec une première période de référence dite période d'apprentissage. Le module de gestion de mise en veille 111 est configuré pour procéder à une analyse de ces premières informations pour une période d'apprentissage de référence T1 qui revêt un intérêt particulier au sens de l'usage, par exemple une période d'une semaine, dont il est fait une utilisation réitérée, cycliquement. En effet, il arrive très souvent que les utilisateurs (humains) d'un réseau de communication montrent des comportements récurrents à une échelle hebdomadaire dans la mesure où la vie quotidienne est souvent organisée selon une telle échelle temporelle hebdomadaire. Par exemple, dans le contexte domestique d'un foyer, ou même dans un contexte professionnel d'entreprise, des habitudes d'utilisation peuvent être telles qu'il soit possible d'identifier, pour un ou plusieurs des dispositifs points d'accès sans fil d'un réseau de communication, des périodes au cours desquelles aucune station n'est généralement connectée. A titre d'exemple, il est possible d'imaginer un logement où personne n'est présent le mardi après-midi, sauf exception. Selon un autre exemple, il est possible d'imaginer une entreprise dont les bureaux sont fermés le vendredi après-midi. Selon un autre exemple encore, il est possible d'imaginer un commerce dont la boutique est fermée le lundi, mais dont le bureau est occupé et utilisé pour l'accomplissement de travaux de gestion. Ainsi, il est possible de déterminer, par apprentissage automatisé, des périodes lors desquelles la ressource radio R1 du dispositif point d'accès sans fil 11 n'est jamais sollicitée, en relation avec une période de référence telle que la semaine s'écoulant du lundi à 00:00 heures jusqu'au dimanche suivant à 23:59 heures. Comme toute analyse temporelle, une analyse ainsi opérée requiert d'être réalisée avec un certain niveau de précision, encore appelée communément « granularité », et qui veut que d'autres périodes de références soient prédéfinies pour ne pas avoir à traiter un trop grand nombre d'informations tout en garantissant que les données mémorisées pour l'analyse revêtent un sens certain. Ainsi, pour ce qui concerne l'analyse du temps et des instants de connexion et de déconnexion de stations à un réseau de communication, il est possible de considérer qu'un niveau de précision (et donc une unité de temps) de l'ordre de la minute est trop élevé, et qu'un niveau de précision de l'ordre de la demi-journée est bien trop faible, s'agissant, *in fine*, de réaliser des économies d'énergie électrique. C'est pourquoi, le procédé de mise en veille d'une ressource radio, objet d'un ou plusieurs modes de réalisation, est conçu avec une temporalité se référant à plusieurs périodes de référence :
- une première période de référence qui est une « période d'apprentissage » T1, utilisée de façon réitérée de sorte à détecter des régularités en termes d'utilisation d'une ressource radio, traduisibles sous la forme de deuxièmes périodes T2 au cours desquelles une ou plusieurs ressources radio d'un réseau de communication 1 peuvent être mises en veille ou éteintes ; la période de référence d'apprentissage T1 est préférentiellement une semaine, pour les raisons évoquées précédemment, et,
- des troisièmes périodes de référence T3 qui définissent la précision ou granularité de l'analyse, par exemple, des périodes d'une durée d'un quart d'heure, d'une demi-heure ou d'une heure.

La **Fig. 2** illustre les références temporelles T1, T2 et T3 que sont les premières périodes T1, deuxièmes périodes T2 et troisièmes périodes T3 décrites ci-avant selon une représentation graphique présentant le défilement du temps t en abscisse. L'illustration montre dans la partie supérieure de la Fig. 2 une période T1 d'une semaine, déterminée en relation avec la ressource radio R1, découpée en sept jours T1-1, T1-2, T1-3, T1-4, T1-5, T1-6 et T1-7. La partie inférieure de la Fig. 2 présente à titre d'exemple des détails du jour T1-2 (donc un mardi), à savoir des périodes de références T3 au nombre de 48, référencées ici T3-2-1 à T3-2-48, selon un format T3-i-j où i est le numéro du jour dans la première période de référence T1 et j est le numéro de la troisième période de référence T3 dans le jour considéré de la première période de référence T1 (d'une durée d'une semaine). Les périodes T3 étant au nombre de 48 selon l'exemple de réalisation illustré, chacune des troisièmes périodes de référence T3 dure 30 minutes. Ces troisièmes périodes de référence temporelle sont donc appelées T3-2-1, T3-2-2, T3-2-3, etc. Il en résulte qu'une analyse détaillée par le module de gestion de mise en veille 111 du dispositif point d'accès sans fil 11, opérant cycliquement sur plusieurs périodes de référence T1, c'est-à-dire à partir de données recueillies représentatives de l'utilisation et donc de l'absence d'utilisation de la ressource radio R1 pendant plusieurs semaines successives, permet une détermination de périodes T2 de la semaine au cours desquelles il est probable qu'aucune station ne soit connectée à la ressource radio R1. Les périodes T3 sont donc au nombre de 336 (48 demi-heures × 7 jours) pour une période de référence T1 égale à une semaine. Selon l'exemple décrit ces périodes sont les périodes T11 le lundi (soit durant T1-1) ; T21 et T22 le mardi (soit durant T1-2) ; T31 le mercredi (soit durant T1-3) ; T41 et T42 le jeudi (soit durant T1-4) ; T51 le vendredi (soit durant T1-5) et T71 le dimanche (soit durant T1-7). Selon l'exemple représenté, il est possible de constater qu'aucune période de mise en veille (ou d'extinction) de la ressource radio R1 n'est prévisible le samedi (soit durant T1-6). Par exemple, cela peut être le cas si une station au moins est systématiquement opérationnelle et connectée au réseau de communication 1, via la ressource radio R1, tout le samedi, par exemple si un ou plusieurs smartphones sont connectés en continu au réseau de communication 1 via la ressource radio R1.

Avantageusement et selon un mode de réalisation, le module de gestion de mise en veille 111 du dispositif point d'accès sans fil 11 comprend un réseau de neurones présentant, dans un exemple, une couche d'entrée qui traite les premières informations dont au moins le jour de la semaine T1-i et le créneau horaire T3-i-j ; une couche cachée composée de 64 neurones et configurée pour opérer un apprentissage automatisé ; une couche de sortie présentant une fonction d'activation sigmoïde, un optimiseur Adam et une fonction de perte d'entropie croisée binaire. Bien évidemment cet exemple n'est pas limitatif et le module de gestion de mise en veille peut être implémenté sous une autre forme, telle que par exemple un arbre de décision modélisant des résultats possibles d'une suite de choix interconnectés. Cette structure permet au module de gestion de veille 111 d'implémenter un modèle de classification à deux classes, à savoir une classe 0 si aucune station n'est connectée à la ressource radio pendant la période T3 de référence considérée et une classe 1 si au moins une station est connectée à la ressource radio R1 pendant cette période de référence T3. Le réseau de neurones du module de gestion de veille 111 traite donc des informations issues des premières informations horodatées collectées (les informations de connexion et de déconnexion des stations à la ressource radio R1), lesquelles informations indiquent pour chaque période de référence T3, d'une demi-heure, si au moins une station est connectée à la ressource radio R1 ou non. Idéalement, la phase d'apprentissage est réalisée sur une période d'apprentissage globale de plusieurs semaines (donc plusieurs périodes T1, successivement), c'est-à-dire que la phase d'apprentissage est exécutée itérativement pour plusieurs périodes T1 de référence. Il en résulte qu'il est possible de prévoir pour chaque période de référence T3 d'une demi-heure lors d'une semaine à venir ou en cours, quelle est la probabilité qu'une station soit ou non connectée à la ressource radio R1.

Le même principe est appliqué à tous les dispositifs points d'accès sans fil du réseau de communication 1. Un apprentissage automatisé est réalisé pour chacun des dispositifs points d'accès sans fil 11, 12 et 13, par son module de gestion de mise en veille interne, lequel module comprend un réseau de neurones configuré pour ce faire.

Selon une variante de réalisation, les premières informations représentatives de l'utilisation de chacune des ressources radio du réseau de communication 1 sont collectées par le serveur distant SRV 1001 qui opère un apprentissage automatisé pour chacun des modules et lui adresse ensuite les périodes T2 déterminées au cours desquelles des ressources radios peuvent être mises en veille ou éteintes. Les termes « mise en veille » désignent ici tout mode de réduction d'énergie électrique permettant de limiter substantiellement la consommation électrique d'une ressource radio. Ce peut être une veille simple, une veille profonde ou encore une extinction complète de la ressource radio considérée. Par exemple les ressources radio peuvent être alimentées électriquement par des lignes d'alimentation respectivement contrôlées par interrupteurs électroniques commandés à partir des différents modules de gestion de mise en veille tels que le module de gestion de mise en veille 111.

Selon une variante de réalisation, le module de gestion de mise en veille est configuré pour opérer à partir de données relatives à l'ensemble des ressources radio appliquées à ses entrées et en présentant en sortie des données indiquant des perspectives de mise en veille pour chacune des ressources radio du réseau de communication 1.

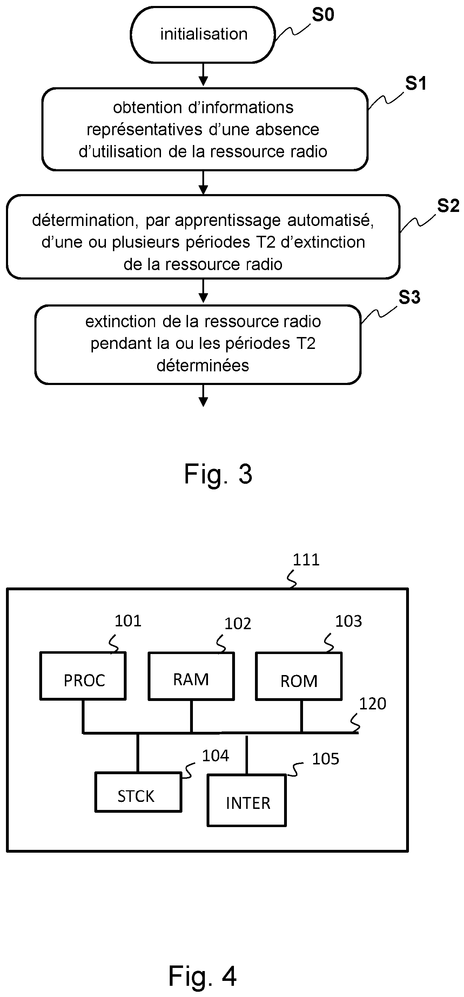

La **Fig. 3** est un ordinogramme illustrant des étapes d'un procédé exécuté par le module de gestion de mise en veille 111 du dispositif point d'accès sans fil 11 configuré pour déterminer des périodes T2 de mise en veille de la ressource radio R1 à partir de prédictions P d'utilisation de la ressource radio R1 par une ou plusieurs stations à un instant donné de la semaine courante ou d'une semaine à venir. Une première étape **S0** est une étape d'initialisation au terme de laquelle tous les dispositifs du réseau de communication 1 sont alimentés et initialisés pour opérer de façon nominale. Une étape **S1** est une étape de collecte des premières informations comprenant notamment les informations de connexion et de déconnexion observées d'une ou plusieurs stations au réseau de communication 1 pendant une ou plusieurs (mais au moins une) périodes d'apprentissage T1, incluant des informations d'horodatage. Ces informations sont mémorisées, par exemple dans le dispositif point d'accès sans fil 1 ou encore dans le serveur distant SRV 1001. Une étape **S2** comprend conditionnellement une phase d'apprentissage automatisé (ou entraînement ou « *machine learning* », en anglais) au cours de laquelle le réseau de neurones interne du module de gestion de mise en veille 111 est entrainé à la détermination de périodes T2 pour lesquelles un certain niveau de probabilité **P** d'absence d'utilisation de la ressource radio R1 est déterminé, à partir des premières informations collectées puis mises en forme. Si aucune phase d'apprentissage automatisé n'a encore été exécutée, alors une phase d'apprentissage automatisée est nécessaire et est exécutée. Si au contraire, une phase d'apprentissage automatisée a déjà été exécutée, alors une nouvelle phase d'apprentissage automatisé est optionnelle. Il est à noter toutefois que plus les phases d'apprentissage automatisé sont nombreuses, plus les prédictions délivrées par le modèle entraîné seront précises et fiables. Le réseau de neurones est entraîné en appliquant à ses entrées et à ses sorties des premières informations collectées et mises en forme, à savoir des instants de la période d'apprentissage T1 en référence à des périodes de références T3 successives en entrée et des informations quant à la connexion d'au moins une station à la ressource radio R1 ou à une absence de connexion d'une quelconque station à la ressource radio R1 en sortie. Au terme de cet apprentissage, le réseau de neurones est donc configuré pour fournir une prédiction P d'absence de connexion d'une quelconque station à la ressource radio R1, pour une ou plusieurs périodes (K périodes) de référence T3 successives, laquelle prédiction P est assortie pour chaque période de référence T3, d'un indice de confiance C(P) représentatif d'un niveau de confiance attribué à la prédiction. Ainsi un niveau de probabilité est déterminé ensuite lors d'une phase d'exploitation du modèle entrainé, en utilisant là encore des premières informations obtenues, pour chacune des périodes de référence T3, aboutissant à la détermination de périodes T2 de mise en veille. Selon un mode de réalisation, il est analysé pour ce faire, lors d'une suite de K périodes de référence T3, si au moins N périodes de référence T3 successives présentent une prédiction P selon laquelle aucune station ne sera connectée à la ressource radio R1. Ces informations sont mémorisées pour être accessibles ultérieurement. Une fois ces périodes de mise en veille possible T2 déterminées, une étape **S3** consiste en une étape d'utilisation de ces périodes déterminées, lors desquelles, le module de gestion de mise en veille 111 commande la ressource radio R1 en mise en veille et en sortie de veille le cas échéant, et selon les périodes T2 déterminées.

Selon un mode de réalisation, l'étape S3 de contrôle de la mise en veille de la ressource radio R1 est opérée par l'envoi d'une commande d'extinction à la ressource radio R1 selon un protocole prédéfini, générique ou propriétaire, sous contrôle d'un contrôleur dédié (un module comprenant de la circuiterie électronique ou un microprocesseur, par exemple). Selon un exemple de réalisation, les commandes sont envoyées selon un protocole conforme à un standard dit « EasyMesh », selon lequel un contrôleur du réseau de communication concerné adresse un message Easy Mesh AP AutoConfiguration Renew à un Agent EasyMesh en charge de la ressource radio à éteindre d'un point d'accès du réseau de communication. L'Agent EasyMesh répond ensuite à ce message par un message EasyMesh AP Autoconfiguration WSC M1 pour la radio concernée, et plus généralement pour toutes les ressources radios dont il assure la gestion. Pour chaque message EasyMesh AP Autoconfiguration WSC M1, le contrôleur répond ensuite par un message EasyMesh AP Autoconfiguration WSC M2 contenant la liste des BSS (Basic Service Set) à configurer pour la ressource radio concernée. Selon l'exemple décrit ici, avantageusement et astucieusement, et pour procéder à l'extinction d'une ressource radio donnée, le contrôleur n'inclut pas de configuration concernant cette ressource radio dans le message EasyMesh AP Autoconfiguration WSC M2 qui est dédié à cette ressource radio. *A contrario*, pour une commande d'allumage d'une ressource radio faisant suite à une période d'extinction, le contrôleur inclut une configuration pour la ressource radio concernée dans le message EasyMesh AP Autoconfiguration WSC M2 qui lui est dédié.

Selon un mode de réalisation, le jeu de données d'entrainement (les premières informations) est divisé en deux sous-ensembles d'informations (ici les premières informations) dont l'un, premier, est utilisé pour opérer lesdites prédictions à l'aide du réseau de neurones, et l'autre, deuxième, est utilisé pour déterminer un seuil de confiance C_{S} associé à chacune des informations de prédiction déterminée. Ainsi, des données prédites sont comparées à des données réelles, pour des périodes de référence T3 prédéfinies, et la valeur du seuil de confiance C_{S} est calculée de sorte que X% de prédictions P dont l'indice de confiance C(P) associé est supérieur ou égal à C_{S} soit juste (en d'autres termes, la valeur prédite est égale à la valeur réelle). Selon un exemple de réalisation, X est égal à 100%.

Selon un mode de réalisation, les prédictions de la présence ou de l'absence d'au moins une station connectée à la ressource radio R1 est déterminé pour K périodes T3 de références à venir. Le nombre K de périodes de référence successives pour lesquelles une prédiction P est déterminée est prédéfini. Il s'agit d'une donnée d'entrée de l'algorithme implémenté qui peut être ajustée selon un compromis entre le niveau de performances et une quantité de ressources nécessaires à la mise en œuvre du procédé et utilisées par l'algorithme. Ce nombre K est nécessairement supérieur à un entier N qui désigne un bloc de N périodes T3 de référence consécutives pendant lequel il est prédit que la ressource radio R1 sera inactive. L'entier N assure ici une fonction de filtre « passe-bas » garantissant un certain niveau de continuité ou de stabilité de l'extinction ou de l'allumage d'une ressource radio pour éviter des variations trop rapprochées. N est également un paramètre ajustable de l'algorithme, qui peut être modifié à distance ou par reconfiguration de logiciel bas niveau (ou « *firmware* », en l'anglais).

Ainsi et selon un mode de réalisation, chaque prédiction P de présence ou d'absence de station connectée à la ressource radio R1 est accompagnée d'un indice de confiance C(P), par exemple sous la forme d'une valeur décimale comprise dans l'intervalle [0, 1]. Par exemple, une prédiction P déterminée pour une période T3 égale à 1 (il y aura probablement une station connectée) et assortie d'un indice de confiance C(P) = 0,97 signifie que cette probabilité P est estimée fiable à 97%. Le fait d'associer un indice de confiance C(P) à une prédiction P permet de déterminer, pour la ressource radio R1, s'il est possible de la mettre en veille pendant une ou plusieurs périodes de référence T3, déterminant alors ainsi une période de mise en veille ou d'extinction T2 à utiliser en phase d'exploitation.

Selon un mode de réalisation, une ressource radio Rn a vocation à être éteinte si pour N périodes T3 de référence (N<=K) consécutives, la prédiction P indique qu'aucune station ne sera connectée à cette ressource radio Rn et si l'indice de confiance C(P) attribué à cette prédiction P est supérieur à une valeur seuil Cs d'indice de confiance.

Ainsi, pour chaque période de référence T3, si l'indice de confiance C(P) déterminé est supérieur à une valeur seuil prédéfinie C_{S}, et que la prédiction P est égale à 0, il est considéré que la ressource radio R1 sera inactive lors de cette période de référence T3. La valeur seuil C_{S} prédéfinie est paramétrable et dépend d'un coefficient d'efficacité souhaité (encore appelé ici coefficient d'agressivité). Plus la valeur seuil est basse, plus souvent la ressource radio R1 sera éteinte, ce qui permet un gain conséquent en énergie électrique mais accroit sensiblement le risque d'engendrer un impact négatif sur l'expérience utilisateur (en mettant en veille une ressource radio pendant une période donnée alors qu'un utilisateur souhaite finalement s'y connecter pendant la même période). *A contrario*, une valeur seuil plus élevée aboutira à une plus grande disponibilité de la ressource radio R1, ce qui aura un impact positif sur l'expérience utilisateur, mais amoindrira les économies d'énergie électrique recherchées. Des périodes consécutives de référence T3 pour lesquelles la ressource radio est prédite comme étant inactive constituent alors les périodes T2 de mise en veille déterminées.

Selon un mode de réalisation, les étapes S1, S2 et S3 sont opérées itérativement.

La **Fig. 4** illustre schématiquement un exemple d'architecture interne d'un module de gestion de mise en veille 111 du point d'accès sans fil 11. Il est à noter que la Fig. 4 pourrait également représenter une architecture interne d'un point d'accès sans fil tel que le dispositif point d'accès sans fil 12 ou le dispositif point d'accès sans fil 13 ou encore une architecture interne d'un dispositif passerelle de connexion tel que la passerelle domestique GW 10. Selon l'exemple d'architecture matérielle représenté à la Fig. 4, le module de gestion de mise en veille 111 du dispositif point d'accès sans fil 11 comprend alors, reliés par un bus de communication 120 : un processeur ou CPU (« Central Processing Unit » en anglais) 101 ; une mémoire vive RAM (« Random Access Memory » en anglais) 102 ; une mémoire morte ROM (« Read Only Memory » en anglais) 103 ; une unité de stockage telle qu'un disque dur (ou un lecteur de support de stockage, tel qu'un lecteur de cartes SD (« Secure Digital » en anglais) 104 ; au moins une interface de communication 105 permettant au module de gestion de mise en veille 111 du point d'accès sans fil 111 de communiquer avec d'autres dispositifs auxquels il est relié, tels que des ressources radio dont il contrôle l'extinction et la remise en route, ou encore des dispositifs externes, tels que la passerelle domestique GW10 ou le serveur distant SRV 1001.

Le processeur 101 est capable d'exécuter des instructions chargées dans la RAM 102 à partir de la ROM 103, d'une mémoire externe (non représentée), d'un support de stockage (tel qu'une carte SD), ou d'un réseau de communication. Lorsque le module de gestion de mise en veille 111 du dispositif point d'accès sans fil 11 est mis sous tension, le processeur 101 est capable de lire de la RAM 102 des instructions et de les exécuter. Ces instructions forment un programme d'ordinateur causant la mise en œuvre, par le processeur 101, de tout ou partie d'un procédé décrit en relation avec la Fig. 3 ou des variantes décrites de ce procédé.

Tout ou partie du procédé décrit en relation avec la Fig. 3 ou ses variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le module de gestion de mise en veille 111 du point d'accès sans fil 11 comprend de la circuiterie électronique configurée pour mettre en œuvre les procédés décrits en relation avec lui-même. Bien évidemment, le module de gestion de mise en veille 111 du point d'accès sans fil 11 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

## Revendications

1. Procédé de mise en veille d'une ressource radio (R1) d'un dispositif point d'accès sans fil (11) d'un réseau de communication (1), le procédé comprenant :
- i) une obtention (S1) de premières informations représentatives d'une absence d'utilisation par une station de ladite ressource radio (R1) en relation avec une première période de référence (T1) dite période d'apprentissage,
- ii) une détermination (S2) d'une ou plusieurs deuxièmes périodes (T2), dites périodes d'extinction, à partir de tout ou partie desdites premières informations et en relation avec des troisièmes périodes (T3), dites périodes de référence, chacune des périodes d'extinction (T2) étant d'une durée inférieure ou égale à ladite période d'apprentissage (T1), et chacune des périodes de référence (T3) étant inférieure à ladite période d'apprentissage (T1) et inférieure ou égale à une période d'extinction (T2),
- iii) une mise en veille de ladite ressource radio (R1) pendant la ou lesdites périodes d'extinction (T2),
le procédé de détermination (S2) d'une ou plusieurs périodes d'extinction (T2) comprenant une phase d'entrainement d'un modèle d'apprentissage automatisé, et
le procédé **étant caractérisé en ce que** :
- ladite détermination d'une ou plusieurs deuxièmes périodes (T2) est réalisée à partir d'un premier sous-ensemble desdites premières informations, et,
- une détermination d'un indice de confiance (C) pour chacune desdites troisièmes périodes (T3) est réalisée à partir d'un deuxième sous-ensemble desdites premières informations, différent dudit premier sous-ensemble.

2. Procédé de mise en veille selon la revendication 1, dans lequel ledit modèle d'apprentissage automatique est un modèle de classification à deux classes selon lequel une première classe est définie par une absence de connexion d'une quelconque station à ladite ressource radio (R1) pendant une période de référence (T3) considérée et une deuxième classe est définie par une connexion d'au moins une station à ladite ressource radio (R1) pendant une période de référence (T3) considérée.

3. Module de gestion de mise en veille (111) d'une ressource radio (R1) d'un dispositif point d'accès sans fil (11) d'un réseau de communication (1), le module de gestion de mise en veille comprenant une circuiterie électronique configurée pour opérer :
- i) une obtention (S1) de premières informations représentatives d'une absence d'utilisation par une station de ladite ressource radio (R1) en relation avec une première période de référence (T1) dite période d'apprentissage,
- ii) une détermination (S2) d'une ou plusieurs deuxièmes périodes (T2), dites périodes d'extinction (T2), à partir de tout ou partie desdites premières informations et en relation avec des troisièmes périodes (T3), dites périodes de référence, chacune des périodes d'extinction (T2) étant d'une durée inférieure ou égale à ladite période d'apprentissage (T1), et chacune des périodes de référence (T3) étant inférieure à ladite période d'apprentissage (T1) et inférieure ou égale à une période d'extinction (T2),
- iii) une mise en veille de ladite ressource radio (R1) pendant la ou lesdites périodes d'extinction (T2),
le module de gestion de mise en veille (111) comprenant en outre une circuiterie électronique pour opérer ladite détermination (S2) d'une ou plusieurs périodes d'extinction (t2) à partir d'un entrainement d'un modèle d'apprentissage automatisé et **étant caractérisé en ce qu'**il comprend en outre une circuiterie électronique pour opérer :
- ladite détermination (S2) d'une ou plusieurs deuxièmes périodes (T2) à partir d'un premier sous-ensemble desdites premières informations, et,
- une détermination d'un indice de confiance (C) pour chacune desdites troisièmes périodes (T3) à partir d'un deuxième sous-ensemble desdites premières informations, différent dudit premier sous-ensemble.

4. Module de gestion de mise en veille (111) d'une ressource radio (R1) selon la revendication 4, comprenant en outre une circuiterie électronique pour opérer ledit apprentissage automatisé grâce à un modèle de classification à deux classes selon lequel une première classe est définie par une absence de connexion d'au moins une station à ladite ressource radio (R1) pendant une période de référence (T3) considérée et une deuxième classe est définie par une connexion d'au moins une station à ladite ressource radio (R1) pendant une période de référence (T3) considérée.

5. Dispositif point d'accès (11) comprenant au moins une ressource radio (R1) et un module de gestion de mise en veille (111) de ladite ressource radio (R1), selon l'une des revendications 3 à 4.

6. Réseau de communication (1) comprenant au moins un dispositif point d'accès sans fil (11) selon la revendication 5.

7. Produit programme d'ordinateur **caractérisé en ce qu'**il comprend des instructions de codes de programme pour exécuter les étapes du procédé selon l'une quelconque des revendications 1 et 2, lorsque ledit programme est exécuté par un processeur d'un module de gestion de mise en veille (111) d'une ressource radio (R1).

8. Support de stockage d'informations comprenant un produit programme d'ordinateur selon la revendication 7.
